# FASCICULE DE BREVET EUROPEEN

(11) **EP 1 347 179 B1**
(45) Date de publication et mention de la délivrance du brevet: **19.07.2006**
(21) Numéro de dépôt: 03354023.8
(22) Date de dépôt: 14.03.2003
(51) Int. Cl.: F16B 5/01

(54) **Dispositif de fixation démontable pour un panneau à faible densité structurelle**
Lösbare Befestigungsvorrichtung für Paneele mit niedriger Packungsdichte
Releasable fastening device for low packing density panels

(30) Priorité: 21.03.2002 FR 0203567
(43) Date de publication de la demande: 24.09.2003
(73) Titulaire: Bollhoff Otalu S.A., 73490 La Ravoire (FR)
(72) Inventeur: Lejars, Patrick, 73310 Ruffieux (FR)
(74) Mandataire: Hecké, Gérard

(56) Documents cités:
- DE-A- 4 409 297
- DE-U- 9 115 861
- GB-A- 274 827
- US-A- 4 878 792

## Description

### Domaine technique de l'invention

L'invention est relative à un dispositif de fixation démontable composé d'une vis et d'un bouton de retenue pour assembler un panneau de faible densité structurelle à un support fixe, la vis comportant un filet hélicoïdal autotaraudant à contour périphérique progressif à partir de la pointe d'extrémité, et un fût cylindrique de support d'une collerette d'appui, et d'une tête de réception du bouton de retenue.

### Etat de la technique

Des dispositifs de fixation du genre mentionné sont connus des documents DE 4409297, GB 274827 et US 4878792.

L'assemblage sur un support rigide d'un panneau de faible densité structurelle, par exemple de mousse de polystyrène ou de polyuréthane, nécessite généralement des opérations préalables de perçage ou de pose d'inserts dans le panneau. Le montage et démontage des panneaux s'effectuent dans ce cas à l'aide d'outillages, par exemple de tournevis ou de clés spéciales, ce qui rallonge le temps d'intervention. La tenue mécanique de l'assemblage risque d'être affaiblie lors de démontage et remontage répétés.

### Objet de l'invention

L'objet de l'invention consiste à réaliser un dispositif de fixation permettant de maintenir de façon durable un panneau de faible densité structurelle sur un support, de monter et de démonter rapidement sans outillage et de façon répétée le panneau sans dégrader la qualité de l'assemblage, et de supprimer toute opération de préparation du panneau.

Le dispositif selon l'invention est caractérisé en ce que :
- le bouton de retenue est introduit axialement sur la tête du fût en étant monté imperdable et à rotation libre sur la vis entre une position de verrouillage, et une position de déverrouillage,
- des moyens d'indexage coopèrent avec ledit bouton de retenue (20) pour constituer un point dur dans chacune des positions de verrouillage et de déverrouillage.

Selon un mode de réalisation préférentiel, la collerette d'appui est agencée entre la tête du fût et le filet, et présente une section polygonale de diamètre supérieur à celui du fût. Le panneau présente une structure en nid d'abeille ou de mousse en matière plastique. Les moyens d'indexage comportent au moins un ergot solidaire du fût, et une encoche ménagée dans l'embase du bouton de retenue.

Le bouton de retenue possède une forme non circulaire, et est actionné par une rotation de quart de tour entre les positions de verrouillage et de déverrouillage.

### Description sommaire des dessins

D'autres avantages et caractéristiques ressortiront plus clairement de la description qui va suivre d'un mode de réalisation de l'invention donné à titre d'exemple non limitatif, et représenté aux dessins annexés dans lesquels :
- la figure 1 est une vue en coupe du dispositif de fixation selon l'invention pour l'assemblage d'un panneau à un support ;
- la figure 2 représente une vue en coupe selon la ligne 2-2 de la figure 1 ;
- la figure 3 montre une vue selon la flèche F du dispositif de fixation après enlèvement du panneau ;
- les figures 4 et 5 sont des vues en plan de la figure 1, respectivement en position déverrouillée de montage, et en position verrouillée du dispositif de fixation.

### Description d'un mode de réalisation préférentiel

Sur les figures, un dispositif de fixation 10 démontable est utilisé pour assembler rapidement un panneau 12 à un support 14 fixe, lequel possède une dureté supérieure à celle du panneau 12.

Le panneau 12 peut avoir une structure en nid d'abeille, de stratifié, ou de mousse, notamment à base de polyéthylène, de polyuréthane, de polystyrène, ou de tout autre matériau plastique à faible densité structurelle.

Le dispositif de fixation 10 est composé d'une vis 16 à filet 18 hélicoïdal autoraudant, et d'un bouton de retenue 20 tournant à quart de tour.

Le filet 18 en hélice fait saillie du fût 22 cylindrique de la vis 16, et présente un contour périphérique progressif à partir de la pointe d'extrémité 24. La partie intermédiaire du fût 22 est dotée d'une collerette 26 d'appui de forme hexagonale ou polygonale permettant de visser le filet 18 dans le panneau 12.

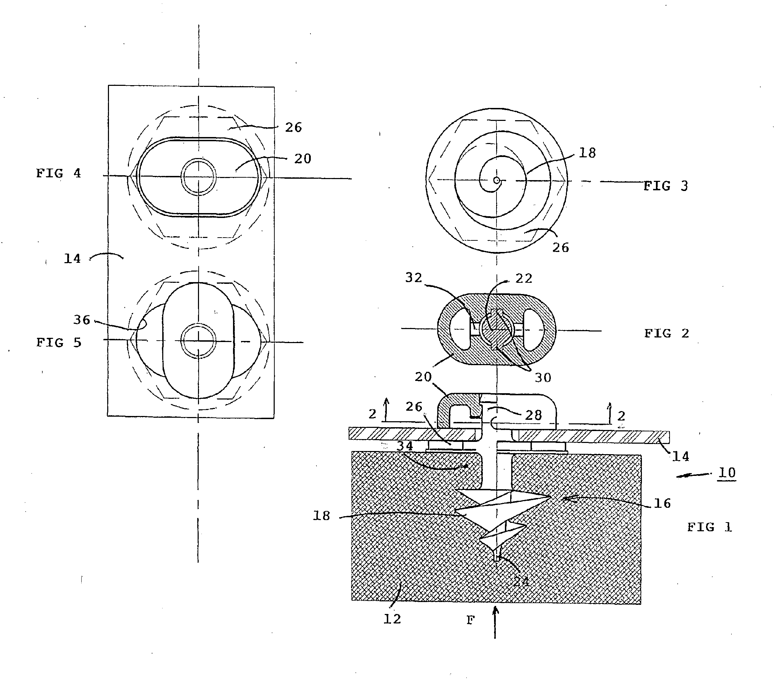

Le bouton de retenue 20 de forme non circulaire, est clipsé sur la tête 28 du fût 22 en étant monté imperdable et à rotation libre sur la vis 16. Il peut être déplacé manuellement entre une position de déverrouillage (figure 4) et une position de verrouillage (figure 5) suite à un mouvement de rotation à quart de tour dans le sens horaire ou dans le sens opposé. L'indexation dans l'une de ces positions s'opère au moyen d'une paire d'ergots 30 solidaires du fût 22, et coopérant radialement avec des encoches 32 ménagées dans l'embase du bouton 20 de manière à constituer un point dur.

La vis 16 et le bouton 20 du dispositif de fixation 10 peuvent être réalisée en matière plastique ou métallique.

La mise en oeuvre du dispositif de fixation 10 pour l'assemblage du panneau 12 au support 14 s'effectue de la manière suivante:

On visse d'abord la vis 16 dans le panneau 12 en la faisant tourner au moyen de la collerette 26 hexagonale. Le profil de la pointe 24 et du filet 18 hélicoïdal autotaraudant ne nécessite aucune préparation spéciale du panneau 12, notamment de perçage de trou, de montage d'insert après moulage ou surmoulage, etc..

Le vissage de la vis 16 est terminé lorsque la collerette d'appui 26 vient en engagement avec la face du panneau 12. La pénétration du filet 18 dans le panneau 12 crée autour du fût 22 cylindrique une importante section de matière 34 qui s'étend jusqu'à la collerette 26, de manière à obtenir une bonne résistance à l'arrachement en traction de la vis 16.

Le bouton de retenue 20 est introduit axialement sur la tête 28 du fût 22 à l'opposé de la pointe 24. Le montage imperdable du bouton 20 sur la vis 16 permet toujours de l'actionner en rotation par rapport au fût 22 fixe.

Le panneau 12 équipé du dispositif de fixation 10 constitué par l'ensemble vis 16 et bouton 20, est ensuite présenté en regard du support 14, lequel possède un trou oblong 36 réalisé lors de la fabrication du support 14. Le bouton 20 est actionné en position de déverrouillage (figure 4) pour permettre son introduction dans le trou 36 de forme complémentaire du support 14.

Lorsque la collerette d'appui 26 de la vis 16 vient au contact avec le support 14, le bouton 20 a traversé complètement le trou oblong 36, et se trouve en saillie par rapport au support 14. Il suffit finalement de toumer le bouton 20 d'un quart de tour pour le déplacer vers la position de verrouillage (figure 5). Dans cette position, le bouton 20 ne peut plus repasser à travers le trou 36, entraînant le blocage et le maintien durable du panneau 12 sur le support 14.

Le démontage du panneau 12 s'effectue par la manoeuvre inverse du bouton 20 suite à une rotation d'un quart de tour vers la position de déverrouillage de la figure 4. Le bouton 20 peut repasser à travers le trou 36 de manière à libérer le panneau 12.

Les opérations de montage et de démontage du panneau 12 avec le support 14 peuvent être répétées de nombreuses fois par la simple rotation du bouton 20, et sans aucune dégradation des composants et de la tenue mécanique de l'assemblage.

## Revendications

1. Dispositif de fixation (10) démontable composé d'une vis (16) et d'un bouton de retenue (20) pour assembler un panneau (12) de faible densité structurelle à un support (14) fixe, la vis (16) comportant un filet (18) hélicoïdal autotaraudant à contour périphérique progressif à partir de la pointe d'extrémité (24), et un fût (22) cylindrique de support d'une collerette d'appui (26), et d'une tête (28) de réception du bouton de retenue (20).
**caractérisé en ce que** :
- le bouton de retenue (20) est introduit axialement sur la tête (28) du fût (22) en étant monté imperdable et à rotation libre sur la vis (16) entre une position de verrouillage, et une position de déverrouillage,
- des moyens d'indexage coopèrent avec ledit bouton de retenue (20) pour constituer un point dur dans chacune des positions de verrouillage et de déverrouillage.

2. Dispositif de fixation selon la revendication 1, **caractérisé en ce que** les moyens d'indexage comportent au moins un ergot (30) solidaire du fût (22), et une encoche (32) ménagée dans l'embase du bouton (20) de retenue.

3. Dispositif de fixation selon la revendication 1 ou 2, **caractérisé en ce que** la collerette d'appui (26) est agencée entre la tête (28) du fût (22) et le filet (18), et présente une section polygonale de diamètre supérieur à celui du fût (22).

4. Dispositif de fixation selon la revendication 1, **caractérisé en ce que** le bouton de retenue (20) possède une forme non circulaire.

5. Dispositif de fixation selon la revendication 4, **caractérisé en ce que** le bouton de retenue (20) est actionné par une rotation de quart de tour entre les positions de verrouillage et de déverrouillage.

6. Dispositif de fixation selon l'une des revendications 1 à 5, **caractérisé en ce que** le panneau (12) présente une structure en nid d'abeille ou de mousse en matière plastique.

## Claims

1. Releasable fastening device (10) composed of a screw (16) and a securing knob (20) to assemble a low packing density panel (12) to a fixed support (14), the screw (16) comprising a self-tapping spiral thread (18) with a peripheral outline that is progressive from the end tip (24), and a cylindrical shank (22) supporting a flange ring (26), and of a head (28) for receiving the securing knob (20),
**characterized in that**:
- the securing knob (20) is fitted axially onto the head (28) of the shank (22) and is mounted captive and able to rotate freely on the screw (16) between a secured position and a released position,
- indexing means operate in conjunction with said securing knob (20) to form a stop point in both the secured position and the released position.

2. Fastening device according to claim 1, **characterized in that** the indexing means comprise at least one stop pin (30) integral to the shank (22) and a groove (32) arranged in the base of the securing knob (20).

3. Fastening device according to claim 1 or 2, **characterized in that** the flange ring (26) is arranged between the head (28) of the shank (22) and the thread (18) and presents a polygonal cross-section of larger diameter than that of the shank (22).

4. Fastening device according to claim 1, **characterized in that** the securing knob (20) has a non-circular shape.

5. Fastening device according to claim 4, **characterized in that** the securing knob (20) is actuated by rotation through a quarter-turn between the secured position and the released position.

6. Fastening device according to one of the claims 1 to 5, **characterized in that** the panel (12) presents a honeycomb structure made of foam or plastic.

## Patentansprüche

1. Lösbare Befestigungsvorrichtung (10), die eine Schraube (16) und einen Stopperknopf (20) umfasst, um eine Platte (12) mit geringer Strukturdichte mit einem festen Träger (14) zu verbinden, wobei die Schraube (16) ein selbstschneidendes, spiralförmiges Gewinde (18) mit von der Endspitze (24) her zunehmendem äußeren Umfang, und einen zylindrischen Schaft (22) zum Tragen eines Auflageflansches (26) sowie einen Kopf (28) zur Aufnahme des Stopperknopfs (20) umfasst,
**dadurch gekennzeichnet, dass**
- der Stopperknopf (20) axial auf den Kopf (28) des Schafts (22) gesetzt wird, wobei er unvenierbar und frei drehbeweglich zwischen einer Verriegelungsposition und einer Entriegelungsposition auf die Schraube (16) montiert ist;
- Indexierungsmittel mit dem Stopperknopf (20) zusammenwirken, um in beiden Positionen, der Ver- und der Entriegelungsposition, jeweils eine harte Stelle zu bilden.

2. Befestigungsvorrichtung nach Anspruch 1, **dadurch gekennzeichnet, dass** die Indexierungsmittel mindestens einen Nocken (30), der fest mit dem Schaft (22) verbunden ist, sowie eine im Sockel des Stopperknopfs (20) angeordnete Aussparung umfassen.

3. Befestigungsvorrichtung nach Anspruch 1 oder 2, **dadurch gekennzeichnet, dass** der Auflageflansch (76) zwischen dem Kopf (28) des Schafts (22) und dem Gewinde (18) angeordnet ist und einen polygonalen Querschnitt auf weist, dessen Durchmesser größer ist als der des Schafts (22).

4. Befestigungsvorrichtung nach Anspruch 1, **dadurch gekennzeichnet, dass** der Stopperknopf (20) eine nichtrunde Form besitzt.

5. Befestigungsvorrichtung nach Anspruch 4, **dadurch gekennzeichnet, dass** der Stopperknopf (20) durch Drehen um eine Vierteldrehung zwischen der Ver-und Entriegelungsposition betätigt wird.

6. Befestigungsvorrichtung nach einem der Ansprüche 1 bis 5, **dadurch gekennzeichnet, dass** die Struktur der Platte (12) entweder wabenartig oder kunststoffschaumartig ist.
